(19) **Europäisches Patentamt**
**European Patent Office**
**Office européen des brevets**

(11) **EP 4 394 707 A1**

(12) **EUROPEAN PATENT APPLICATION**
published in accordance with Art. 153(4) EPC

(43) Date of publication:
**03.07.2024 Bulletin 2024/27**

(51) International Patent Classification (IPC):
**G06T 7/90** (2017.01)    **G06T 9/00** (2006.01)

(21) Application number: **22860173.8**

(86) International application number:
**PCT/CN2022/108996**

(22) Date of filing: **29.07.2022**

(87) International publication number:
**WO 2023/024827 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.08.2021 CN 202110986048**

(71) Applicant: **ZTE Corporation**
**Shenzhen, Guangdong 518057 (CN)**

(72) Inventor: **PU, Yuliang**
**Shenzhen, Guangdong 518057 (CN)**

(74) Representative: **Ipsilon**
**Le Centralis**
**63, avenue du Général Leclerc**
**92340 Bourg-la-Reine (FR)**

(54) **COLOR SPACE SWITCHING METHOD AND APPARATUS, ELECTRONIC DEVICE AND READABLE STORAGE MEDIUM**

(57)    The present disclosure provides a color space switching method and apparatus, an electronic device, and a computer-readable storage medium. The color space switching method includes: converting image data in a YUV format into image data in an RGB format according to first color space switching formulae; and the first color space switching formulae include: $R = f(Y, V)$; $G = f(Y, U, V)$; $B = f(Y, U)$, where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

100

convert image data in a YUV format into image data in an RGB format according to first color space switching formulae; and the first color space switching formulae include: $R=f(Y, V)$; $G=f(Y, U, V)$; $B=f(Y, U)$, where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format

FIG. 1

**Description**

CROSS REFERENCE TO RELATED APPLICATIONS

The present disclosure claims the priority to Chinese Patent Application No. 202110986048.4 filed with the CNIPA on August 26, 2021, the contents of which are incorporated herein by reference in their entirety.

TECHNICAL FIELD

The present disclosure relates to, but is not limited to, the field of data processing technology.

BACKGROUND

In a cloud computing system under the client-server architecture, streaming media data needs to be encoded before being transmitted in a network and needs to be decoded after being transmitted in the network. For image data, image data in an RGB format needs to be converted into image data in a YUV format before encoding, and the image data in the YUV format needs to be converted into the image data in the RGB format after decoding. Color space switching refers to inter-conversion between the image data in the RGB format and the image data in the YUV format. Due to the limited computing power of a client, the current color space switching methods cannot ensure non-distortion of image data and computational speed at the same time at the client.

SUMMARY

The present disclosure provides a color space switching method and apparatus, an electronic device, and a computer-readable storage medium.

In a first aspect, the present disclosure provides a color space switching method applied to a client, including: converting image data in a YUV format into image data in an RGB format according to first color space switching formulae; wherein the first color space switching formulae include: $R = f(Y, V)$; $G = f(Y, U, V)$; $B = f(Y, U)$; where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

In a second aspect, the present disclosure provides a color space switching method applied to a server, including: converting image data in an RGB format into image data in a YUV format according to second color space switching formulae; wherein the second color space switching formulae include: $Y = f1(R, G, B)$; $U = f2(R, G, B)$; $V = f3(R, G, B)$; where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

In a third aspect, the present disclosure provides an electronic device, including: at least one processor; and a memory having stored thereon at least one program which, when executed by the at least one processor, implements any one of the color space switching methods described herein.

In a fourth aspect, the present disclosure provides a computer-readable storage medium having stored thereon a computer program which, when executed by a processor, implements any one of the color space switching methods described herein.

In a fifth aspect, the present disclosure provides a color space switching apparatus, including: a first conversion module configured to convert image data in a YUV format into image data in an RGB format according to first color space switching formulae; wherein the first color space switching formulae include: $R = f(Y, V)$; $G = f(Y, U, V)$; $B = f(Y, U)$; where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

In a sixth aspect, the present disclosure provides a color space switching apparatus, including: a second conversion module configured to convert image data in an RGB format into image data in a YUV format according to second color space switching formulae; wherein the second color space switching formulae include: $Y = f1(R, G, B)$; $U = f2(R, G, B)$; $V = f3(R, G, B)$; where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

BRIEF DESCRIPTION OF DRAWINGS

FIG. 1 is a flowchart illustrating a color space switching method according to the present disclosure;
FIG. 2 is a flowchart illustrating a method for determining a bit width supported by a register according to the present disclosure;
FIG. 3 is a flowchart illustrating a color space switching method according to the present disclosure;
FIG. 4 is a block diagram of a color space switching apparatus according to the present disclosure; and
FIG. 5 is a block diagram of a color space switching apparatus according to the present disclosure.

DETAIL DESCRIPTION OF EMBODIMENTS

In order to enable those of ordinary skill in the art to better understand the technical solutions of the present disclosure, a color space switching method and apparatus, an electronic device, and a computer-readable storage medium provided by the present disclosure are described in detail below with reference to the drawings.

Exemplary implementations of the present disclosure will be described more fully below with reference to the drawings, but the exemplary implementations described herein may be embodied in different forms and should not be interpreted as being limited to the implementations described herein. Rather, the implementations are provided to make the present disclosure thorough and complete, and may enable those of ordinary skill in the art to fully understand the scope of the present disclosure.

The implementations described herein and the features therein can be combined with one another if no conflict is incurred.

The term "and/or" used herein includes any and all combinations of at least one associated listed item.

The terms used herein are merely used to describe specific implementations, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

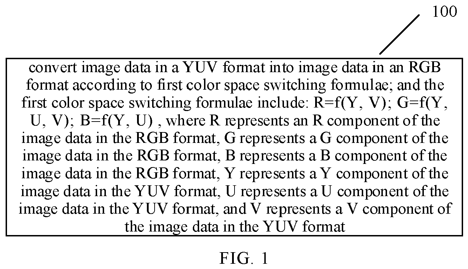

FIG. 1 is a flowchart illustrating a color space switching method according to the present disclosure.

In a first aspect, referring to FIG. 1, an implementation of the present disclosure provides a color space switching method applied to a client, and the method includes: operation 100, converting image data in a YUV format into image data in an RGB format according to first color space switching formulae; and the first color space switching formulae include: R = f(Y, V); G = f (Y, U, V); B = f (Y, U), where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

In some exemplary implementations, the first color space switching formulae include:

$$R = \left(Y \times 128 + N1 \times \left(V - 128\right)\right)/128;$$

$$G = \left(Y \times 128 - N2 \times \left(U - 128\right) - N3 \times \left(V - 128\right)\right)/128;$$

$$B = \left(Y \times 128 + N4 \times \left(U - 128\right)\right)/128;$$

where N1, N2, N3, and N4 are conversion coefficients.

In some exemplary implementations, values of N1, N2, N3, and N4 range from 0 to 128.

According to the color space switching method provided in the present disclosure, R merely relates to two parameters of Y and V, and B merely relates to two parameters of Y and U, so that merely four conversion coefficients are needed. Thus, compared with the related technology which desires six conversion coefficients, the color space switching method of the present disclosure reduces two conversion coefficients, reduces the storage space of intermediate variables on the premise of ensuring no distortion of the image data, achieves color space switching with merely one injection of the image data, and improves the computational speed.

In some exemplary implementations, when the first color space switching formulae according to the implementations of the present disclosure are used for converting the image data in the YUV format into the image data in the RGB format, each of a Y component, a U component, and a V component of each pixel of the image data in the YUV format is expressed by 8 bits, and such expression way using 8 bits can produce a same technical effect as an expression way using 10 bits, so that the storage space of 2 bits is saved and utilization efficiency of a register is improved.

In some exemplary implementations, before converting the image data in the YUV format into the image data in the RGB format according to the first color space switching formulae, the method further includes: decoding received image data to obtain the image data in the YUV format.

In some exemplary implementations, the method further includes: determining a bit width supported by a register; completing a pixel number of rows of the image data in the YUV format to an integral multiple of the bit width supported by the register; and continuing to perform an operation of converting the image data in the YUV format obtained after the completion into the image data in the RGB format according to the first color space switching formulae.

In some exemplary implementations, when completing the pixel number of the rows of the image data in the YUV format to the integral multiple of the bit width supported by the register, various completion methods may be adopted. For example, a method of adding a preset character or a method of adding a preset digit (e.g., 0) may be adopted.

In the implementations of the present disclosure, the image data in the YUV format is subjected to completion processing based on the bit width supported by the register, so that the utilization efficiency of the register can reach 100%.

In the implementations of the present disclosure, the bit width supported by the register may be determined in various ways. For example, it is determined whether a register with a bit width of $2^N$ is supported or used by the client, with $2^N$ being the maximum bit width supported by a current (or existing) register; and in a case where the register with the bit width of $2^N$ is supported, the bit width supported by the register is determined as $2^N$.

In a case where the register with the bit width of $2^N$ is not supported and $2^N$ is greater than the minimum bit width supported by the current register, N is subtracted by 1, and the operation of determining whether the register with the bit width of $2^N$ is supported is continuously performed.

In a case where the register with the bit width of $2^N$ is not supported and $2^N$ is less than or equal to the minimum bit width supported by the current register, the image data in the YUV format is converted into the image data in the RGB format according to a corresponding relationship between the image data in the YUV format and the image data in the RGB format.

The maximum and minimum bit widths supported by the current register are not limited in the implementations of the present disclosure. For example, the maximum bit width supported by the current register is 512, and the minimum bit width supported by the current register is 64.

In some exemplary implementations, whether the register with the bit width of $2^N$ is supported may be inquired with a register query instruction.

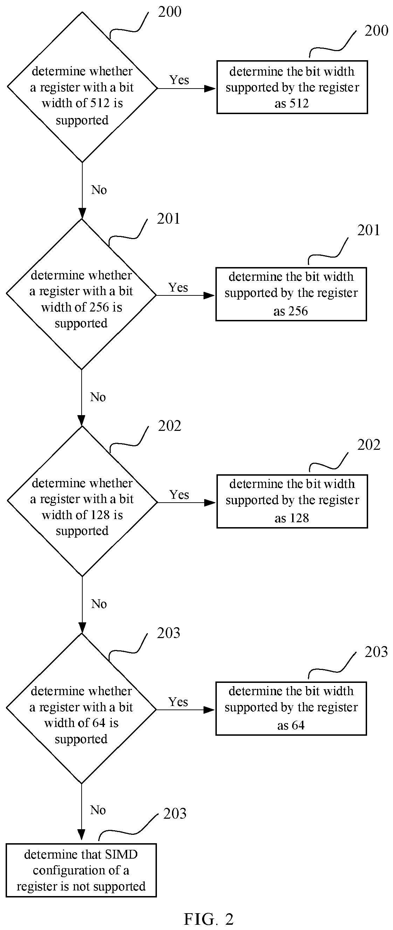

The determination of the bit width supported by the register is illustrated below by taking a case where the maximum bit width supported by the current register is 512 and the minimum bit width supported by the current register is 64 as an example. As shown in FIG. 2, the determination process includes operations 200 to 203.

In operation 200, it is determined whether a register with a bit width of 512 is supported; in a case where the register with the bit width of 512 is supported, the bit width supported by the register is determined as 512; and in a case where the register with the bit width of 512 is not supported, operation 201 is performed.

In operation 201, it is determined whether a register with a bit width of 256 is supported; in a case where the register with the bit width of 256 is supported, the bit width supported by the register is determined as 256; and in a case where the register with the bit width of 256 is not supported, operation 202 is performed.

In operation 202, it is determined whether a register with a bit width of 128 is supported; in a case where the register with the bit width of 128 is supported, the bit width supported by the register is determined as 128; and in a case where the register with the bit width of 128 is not supported, operation 203 is performed.

In operation 203, it is determined whether a register with a bit width of 64 is supported; in a case where the register with the bit width of 64 is supported, the bit width supported by the register is determined as 64; and in a case where the register with the bit width of 64 is not supported, it is determined that Single Instruction Multiple DATA (SIMD) configuration of a register is not supported.

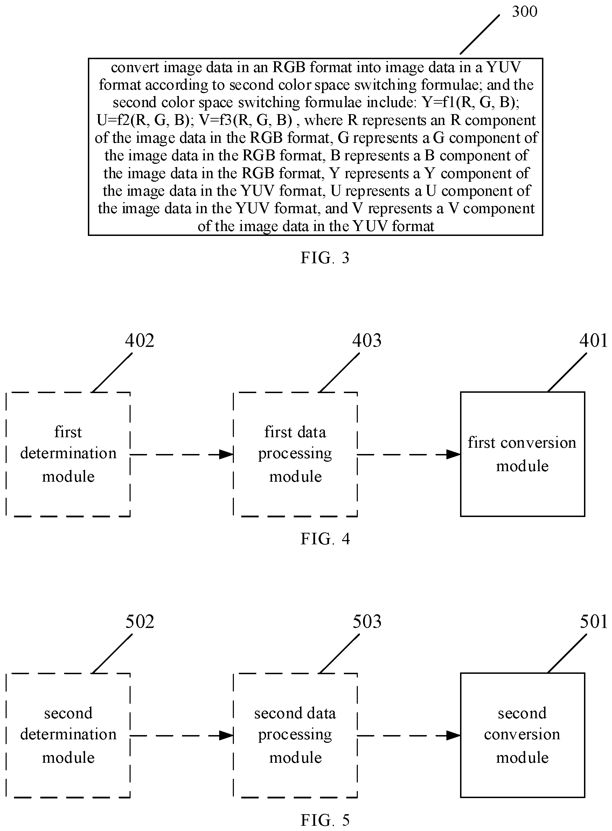

FIG. 3 is a flowchart illustrating a color space switching method according to the present disclosure.

In a second aspect, referring to FIG. 3, another implementation of the present disclosure provides a color space switching method applied to a server, and the method includes: operation 300, converting image data in an RGB format into image data in a YUV format according to second color space switching formulae; and the second color space switching formulae include: Y = f1(R, G, B) ; U = f2(R, G, B) ; V = f3(R, G, B), where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

In some exemplary implementations, the second color space switching formulae include:

$$Y = M1R - (M2/256) \times (G - 128) + (M3/256) \times B\,;$$

$$U = M4R - (M5/256) \times (G - 128) - (M6/256) \times B + 128\,;$$

$$V = M7R + (M8/256) \times (G - 128) - (M9/256) \times B + 128\,;$$

where M1, M2, M3, M4, M5, M6, M7, M8, and M9 are conversion coefficients.

In some exemplary implementations, when the second color space switching formulae according to the implementations of the present disclosure are used for converting the image data in the RGB format into the image data in the YUV format, each of a Y component, a U component, and a V component of each pixel of the image data in the YUV format is expressed by 8 bits, and such expression way using 8 bits can produce a same technical effect as an expression way using 10 bits, so that the storage space of 2 bits is saved and utilization efficiency of a register is improved.

In some exemplary implementations, after converting the image data in the RGB format into the image data in the YUV format according to the second color space switching formulae, the method further includes: encoding the image data in the YUV format.

In some exemplary implementations, the method further includes: determining a bit width supported by a register; completing a pixel number of rows of the image data in the RGB format to an integral multiple of the bit width supported by the register; and continuing to perform an operation of converting the image data in the RGB format obtained after the completion into the image data in the YUV format according to the second color space switching formulae.

In some exemplary implementations, when completing the pixel number of the rows of the image data in the RGB format to the integral multiple of the bit width supported by the register, various completion methods may be adopted. For example, a method of adding a preset character or a method of adding a preset digit (e.g., 0) may be adopted.

In the implementations of the present disclosure, the image data in the RGB format is subjected to completion processing based on the bit width supported by the register, so that the utilization efficiency of the register can reach 100%.

In the implementations of the present disclosure, the bit width supported by the register may be determined in various ways. For example, it is determined whether a register with a bit width of $2^N$ is supported or used by the server, with $2^N$ being the maximum bit width supported by a current (or existing) register; and in a case where the register with the bit width of $2^N$ is supported, the bit width supported by the register is determined as $2^N$.

In a case where the register with the bit width of $2^N$ is not supported and $2^N$ is greater than the minimum bit width supported by the current register, N is subtracted by 1, and the operation of determining whether the register with the bit width of $2^N$ is supported is continuously performed.

In a case where the register with the bit width of $2^N$ is not supported and $2^N$ is less than or equal to the minimum bit width supported by the current register, the image data in the RGB format is converted into the image data in the YUV format according to a corresponding relationship between the image data in the YUV format and the image data in the RGB format.

The maximum and minimum bit widths supported by the current register are not limited in the implementations of the present disclosure. For example, the maximum bit width supported by the current register is 512, and the minimum bit width supported by the current register is 64.

In a third aspect, the present disclosure provides an electronic device, including: at least one processor; and a memory having stored thereon at least one program which, when executed by the at least one processor, implements any of the color space switching methods described above.

The processor is a device having data processing capability, and includes, but is not limited to, a Central Processing Unit (CPU); and the memory is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH).

In some implementations, the processor and the memory are connected to each other through a bus, and then are connected to other components of a computing device.

In a fourth aspect, the present disclosure provides a computer-readable storage medium having stored thereon a computer program which, when executed by a processor, implements any of the color space switching methods described above.

FIG. 4 is a block diagram of a color space switching apparatus according to the present disclosure.

In a fifth aspect, referring to FIG. 4, another implementation of the present disclosure provides a color space switching apparatus (e.g., a client terminal), including: a first conversion module 401 configured to convert image data in a YUV format into image data in an RGB format according to first color space switching formulae; and the first color space switching formulae include: $R = f(Y, V)$ ; $G = f(Y, U, V)$ ;

$B = f(Y, U)$, where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

In some exemplary implementations, the first color space switching formulae include: $R = (Y \times 128 + N1 \times (V-128))/128$ ; $G = (Y \times 128 - N2 \times (U-128) - N3 \times (V-128))/128$; $B = (Y \times 128 + N4 \times (U-128))/128$, where R represents an R component of the image data in the RGB format, G represents a G component of the image data in the RGB format, B represents a B component of the image data in the RGB format, Y represents a Y component of the image data in the YUV format, U represents a U component of the image data in the YUV format, V represents a V component of the image data in the YUV format, and N1, N2, N3, and N4 are conversion coefficients.

In some exemplary implementations, the color space switching apparatus further includes: a first determination module 402 configured to determine a bit width supported by a register; a first data processing module 403 configured to complete a pixel number of rows of the image data in the YUV format to an integral multiple of the bit width supported by the register; and a first conversion module 401 configured to convert the image data in the YUV format obtained after the completion into the image data in the RGB format according to the first color space switching formulae.

In some exemplary implementations, the first determination module 402 is configured to: determine whether a register with a bit width of $2^N$ is supported, with $2^N$ being the maximum bit width supported by a current register, and determine, in a case where the register with the bit width of $2^N$ is supported, the bit width supported by the register as $2^N$

In some exemplary implementations, the first determination module 402 is further configured to: in a case where the register with the bit width of $2^N$ is not supported and $2^N$ is greater than the minimum bit width supported by the current register, subtract 1 from N, and continue to perform the operation of determining whether the register with the bit width of $2^N$ is supported.

In some exemplary implementations, the first conversion module 401 is further configured to: in a case where the register with the bit width of $2^N$ is not supported and $2^N$ is less than or equal to the minimum bit width supported by the current register, convert the image data in the YUV format into the image data in the RGB format according to a corresponding relationship between the image data in the YUV format and the image data in the RGB format.

In some exemplary implementations, each of a Y component, a U component, and a V component of each pixel of the image data in the YUV format is expressed by 8 bits.

A specific implementation process of the color space switching apparatus is the same as that of the color space switching method described in the aforesaid implementations, and thus will not be repeated here.

FIG. 5 is a block diagram of a color space switching apparatus according to the present disclosure.

In a sixth aspect, referring to FIG. 5, another implementation of the present disclosure provides a color space switching apparatus (e.g., a server), including: a second conversion module 501 configured to convert image data in an RGB format into image data in a YUV format according to second color space switching formulae; and the second color space switching formulae include: $Y = f1(R, G, B)$; $U = f2(R, G, B)$; $V = f3(R, G, B)$, where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

In some exemplary implementations, the second color space switching formulae include: $Y = M1R - (M2/256) \times (G-128) + (M3/256) \times B$ ; $U = M4R - (M5/256) \times (G-128) - (M6/256)xB + 128$ ; $V = M7R + (M8/256) \times (G-128) - (M9/256) \times B + 128$, where M1, M2, M3, M4, M5, M6, M7, M8, and M9 are conversion coefficients.

In some exemplary implementations, the color space switching apparatus further includes: a second determination module 502 configured to determine a bit width supported by a register; a second data processing module 503 configured to completing a pixel number of rows of the image data in the RGB format to an integral multiple of the bit width supported by the register; and a second conversion module 501 configured to convert the image data in the RGB format obtained after the completion into the image data in the YUV format according to the second color space switching formulae.

In some exemplary implementations, the second determination module 502 is configured to: determine whether a register with a bit width of $2^N$ is supported, with $2^N$ being the maximum bit width supported by a current register, and determine, in a case where the register with the bit width of $2^N$ is supported, the bit width supported by the register as $2^N$

In some exemplary implementations, the second determination module 502 is further configured to: in a case where the register with the bit width of $2^N$ is not supported and $2^N$ is greater than the minimum bit width supported by the current register, subtract 1 from N, and continue to perform the operation of determining whether the register with the bit width of $2^N$ is supported.

In some exemplary implementations, the second conversion module 501 is further configured to: in a case where the register with the bit width of $2^N$ is not supported and $2^N$ is less than or equal to the minimum bit width supported by the current register, convert the image data in the RGB format into the image data in the YUV format according to a corresponding relationship between the image data in the YUV format and the image data in the RGB format.

In some exemplary implementations, each of a Y component, a U component, and a V component of each pixel of the image data in the YUV format is expressed by 8 bits.

A specific implementation process of the color space switching apparatus is the same as that of the color space switching method described in the aforesaid implementations, and thus will not be repeated here.

It should be understood by those of ordinary skill in the art that the functional modules/units in all or some of the operations, systems and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

**Claims**

1. A color space switching method applied to a client, comprising:

   converting image data in a YUV format into image data in an RGB format according to first color space switching formulae;
   wherein the first color space switching formulae comprise: R = f(Y, V) ; G = f(Y, U, V); B = f(Y, U);
   where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

2. The color space switching method of claim 1, wherein the first color space switching formulae comprise:

$$R = \left(Y \times 128 + N1 \times \left(V - 128\right)\right) / 128 ;$$

$$G = \left(Y \times 128 - N2 \times \left(U - 128\right) - N3 \times \left(V - 128\right)\right) / 128 ;$$

$$B = \left(Y \times 128 + N4 \times \left(U - 128\right)\right) / 128 ;$$

where N1, N2, N3, and N4 are conversion coefficients.

3. The color space switching method of claim 1, further comprising:

determining a bit width supported by a register;
completing a pixel number of rows of the image data in the YUV format to an integral multiple of the bit width supported by the register; and
continuing to perform an operation of converting the image data in the YUV format obtained after completion into the image data in the RGB format according to the first color space switching formulae.

4. The color space switching method of claim 3, wherein determining the bit width supported by the register comprises:

determining whether a register with a bit width of $2^N$ is supported; wherein $2^N$ is a maximum bit width supported by a current register; and
in a case where the register with the bit width of $2^N$ is supported, determining the bit width supported by the register as $2^N$.

5. The color space switching method of claim 4, wherein determining the bit width supported by the register further comprises:
in a case where the register with the bit width of $2^N$ is not supported and $2^N$ is greater than a minimum bit width supported by the current register, subtracting 1 from N, and continuing to perform an operation of determining whether the register with the bit width of $2^N$ is supported.

6. The color space switching method of claim 5, further comprising:
in a case where the register with the bit width of $2^N$ is not supported and $2^N$ is less than or equal to the minimum bit width supported by the current register, converting the image data in the YUV format into the image data in the RGB format according to a corresponding relationship between the image data in the YUV format and the image data in the RGB format.

7. The color space switching method of any one of claims 1 to 6, wherein each of a Y component, a U component, and a V component of each pixel of the image data in the YUV format is expressed by 8 bits.

8. A color space switching method applied to a server, comprising:

converting image data in an RGB format into image data in a YUV format according to second color space switching formulae;
wherein the second color space switching formulae comprise: Y = f1(R, G, B); U = f2(R, G, B); V = f3(R, G, B);
where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

9. The color space switching method of claim 8, wherein the second color space switching formulae comprise:

$$Y = M1R - \left(M2 / 256\right) \times \left(G - 128\right) + \left(M3 / 256\right) \times B ;$$

$$U = M4R - \left(M5 / 256\right) \times \left(G - 128\right) - \left(M6 / 256\right) \times B + 128 ;$$

$$V = M7R + (M8/256) \times (G-128) - (M9/256) \times B + 128;$$

where M1, M2, M3, M4, M5, M6, M7, M8, and M9 are conversion coefficients.

10. The color space switching method of claim 8, further comprising:

   determining a bit width supported by a register;
   completing a pixel number of rows of the image data in the RGB format to an integral multiple of the bit width supported by the register; and
   continuing to perform an operation of converting the image data in the RGB format obtained after completion into the image data in the YUV format according to the second color space switching formulae.

11. The color space switching method of claim 10, wherein determining the bit width supported by the register comprises:

   determining whether a register with a bit width of $2^N$ is supported; wherein $2^N$ is a maximum bit width supported by a current register; and
   in a case where the register with the bit width of $2^N$ is supported, determining the bit width supported by the register as $2^N$.

12. The color space switching method of claim 11, wherein determining the bit width supported by the register further comprises:
   in a case where the register with the bit width of $2^N$ is not supported and $2^N$ is greater than a minimum bit width supported by the current register, subtracting 1 from N, and continuing to perform an operation of determining whether the register with the bit width of $2^N$ is supported.

13. The color space switching method of claim 12, further comprising:
   in a case where the register with the bit width of $2^N$ is not supported and $2^N$ is less than or equal to the minimum bit width supported by the current register, converting the image data in the RGB format into the image data in the YUV format according to a corresponding relationship between the image data in the YUV format and the image data in the RGB format.

14. The color space switching method of any one of claims 8 to 13, wherein each of a Y component, a U component, and a V component of each pixel of the image data in the YUV format is expressed by 8 bits.

15. An electronic device, comprising:

   at least one processor; and
   a memory having stored thereon at least one program which, when executed by the at least one processor, implements the color space switching method of any one of claims 1 to 7, or the color space switching method of any one of claims 8 to 14.

16. A computer-readable storage medium having stored thereon a computer program which, when executed by a processor, implements the color space switching method of any one of claims 1 to 7, or the color space switching method of any one of claims 8 to 14.

17. A color space switching apparatus, comprising:

   a first conversion module configured to convert image data in a YUV format into image data in an RGB format according to first color space switching formulae;
   wherein the first color space switching formulae comprise: R = f(Y, V) ; G = f(Y, U, V); B = f(Y, U);
   where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

18. A color space switching apparatus, comprising:

a second conversion module configured to convert image data in an RGB format into image data in a YUV format according to second color space switching formulae;

wherein the second color space switching formulae comprise: Y = f1(R, G, B); U = f2(R, G, B); V = f3(R, G, B);

where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format.

100

convert image data in a YUV format into image data in an RGB format according to first color space switching formulae; and the first color space switching formulae include: R=f(Y, V); G=f(Y, U, V); B=f(Y, U) , where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format

FIG. 1

FIG. 2

300

convert image data in an RGB format into image data in a YUV format according to second color space switching formulae; and the second color space switching formulae include: Y=f1(R, G, B); U=f2(R, G, B); V=f3(R, G, B) , where R represents an R component of the image data in the RGB format, G represents a G component of the image data in the RGB format, B represents a B component of the image data in the RGB format, Y represents a Y component of the image data in the YUV format, U represents a U component of the image data in the YUV format, and V represents a V component of the image data in the YUV format

FIG. 3

402        403        401

| first determination module | → | first data processing module | → | first conversion module |

FIG. 4

502        503        501

| second determination module | → | second data processing module | → | second conversion module |

FIG. 5

## INTERNATIONAL SEARCH REPORT

| International application No. |
|---|
| **PCT/CN2022/108996** |

| **A.** | **CLASSIFICATION OF SUBJECT MATTER** |
|---|---|

G06T 7/90(2017.01)i;  G06T 9/00(2006.01)n

According to International Patent Classification (IPC) or to both national classification and IPC

| **B.** | **FIELDS SEARCHED** |
|---|---|

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 色彩空间, 转换, 寄存器, 位宽, 补齐, 分量, color, colour, space, RGB, YUV, transform, register, bit wide, supplement, component

| **C.** | **DOCUMENTS CONSIDERED TO BE RELEVANT** | |
|---|---|---|
| Category* | Citation of document, with indication, where appropriate, of the relevant passages | Relevant to claim No. |
| PX | CN 113436285 A (ZTE CORP.) 24 September 2021 (2021-09-24) claims 1-18 | 1-18 |
| X | CN 1347260 A (SAMSUNG ELECTRONICS CO., LTD.) 01 May 2002 (2002-05-01) description, pages 2-6 | 1-7, 15-17 |
| X | CN 101150638 A (CANON INC.) 26 March 2008 (2008-03-26) description, pages 10-11 and 20-21 | 8-16, 18 |
| A | US 5872556 A (INTERNATIONAL BUSINESS MACHINES CORP.) 16 February 1999 (1999-02-16) entire document | 1-18 |
| A | 魏晋南北朝 (Wei Jin Southern and Northern Dynasties). "Image Stride (内存图像行跨度) (Non-official translation: Image Stride (memory image row span))" *https://www.cnblogs.com/wjune-0405/p/14982026.html*, 07 July 2021 (2021-07-07), pp. 1-3 | 1-18 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 October 2022** | **26 October 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2022/108996** |

| Patent document cited in search report | | | Publication date (day/month/year) | Patent family member(s) | | | Publication date (day/month/year) |
| --- | --- | --- | --- | --- | --- | --- | --- |
| CN | 113436285 | A | 24 September 2021 | None | | | |
| CN | 1347260 | A | 01 May 2002 | KR | 100334684 | B1 | 04 May 2002 |
| | | | | DE | 10147317 | A1 | 13 June 2002 |
| | | | | JP | 2006184912 | A | 13 July 2006 |
| | | | | JP | 2002164992 | A | 07 June 2002 |
| | | | | US | 2002036642 | A1 | 28 March 2002 |
| | | | | GB | 2369760 | A | 05 June 2002 |
| CN | 101150638 | A | 26 March 2008 | JP | 2008066988 | A | 21 March 2008 |
| | | | | US | 2008055634 | A1 | 06 March 2008 |
| US | 5872556 | A | 16 February 1999 | EP | 0619675 | A1 | 12 October 1994 |
| | | | | JP | H06348829 | A | 22 December 1994 |
| | | | | DE | 69423120 | D1 | 06 April 2000 |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110986048